# EUROPÄISCHE PATENTSCHRIFT

(11) **EP 1 858 750 B1**
(45) Veröffentlichungstag und Bekanntmachung des Hinweises auf die Patenterteilung: **15.04.2009**
(21) Anmeldenummer: 06707155.5
(22) Anmeldetag: 22.02.2006
(51) Int. Cl.: B62D 65/02, B23K 37/047

(54) **WECHSELVORRICHTUNG FÜR SPANNRAHMEN**
CHANGEOVER DEVICE FOR TENTER FRAMES
DISPOSITIF DE CHANGEMENT POUR CADRE DE SERRAGE

(30) Priorität: 09.03.2005 DE 202005003913 U
(43) Veröffentlichungstag der Anmeldung: 28.11.2007
(73) Patentinhaber: KUKA Systems GmbH, 86165 Augsburg (DE)
(72) Erfinder: KRAUS, Gerhard, 86316 Friedberg (DE); KIKUT, Botho, 86157 Augsburg (DE); MAISCHBERGER, Johann, 86424 Dinkelscherben (DE); STURM, Thomas, 86259 Wiedenzhausen (DE)
(74) Vertreter: Ernicke, Klaus Stefan
(86) Internationale Anmeldenummer: PCT/EP2006/001588
(87) Internationale Veröffentlichungsnummer: WO 2006/094631

(56) Entgegenhaltungen:
- EP-A- 1 172 170
- EP-A- 1 352 818
- EP-B- 0 583 282

## Beschreibung

Die Erfindung betrifft eine Wechselvorrichtung für Spannrahmen in einer Bearbeitungsstation nebst der damit ausgerüsteten Bearbeitungsstation mit den Merkmalen im Oberbegriff der Hauptansprüche.

Eine solche Wechselvorrichtung für Spannrahmen in einer Bearbeitungsstation für Fahrzeugkarosserien ist aus der EP 0 583 282 B1 bekannt. Die Wechselvorrichtung besteht aus mehreren um eine aufrechte Drehachse drehbaren, trommelförmigen Rahmenmagazinen, die mit Distanz zu einer Arbeitsstelle angeordnet sind. Eine Transportvorrichtung verbindet die beidseits einer Transferlinie angeordneten Rahmenmagazine untereinander und mit der Arbeitsstelle. Die Transportvorrichtung besitzt eine gerade Schienenbahn, die im Bereich der Arbeitsstelle und einer dortigen Zustellvorrichtung sowie im Bereich der Rahmenmagazine einen beweglichen Schienenabschnitt aufweist. Die Schienenbahn ist in der einen Ausführungsform als Hängeschienenbahn ausgeführt. In der anderen Variante rollen die Spannrahmen auf Schienen und sind am oberen Ende in einer zweiten Schiene geführt und gegen Kippen gesichert. Für die Transportbewegung der Spannrahmen ist ein Schleppantrieb mit zwei Laufwagen an der oberen, hoch liegenden Schiene vorgesehen.

Es ist Aufgabe der vorliegenden Erfindung, eine verbesserte Wechseltechnik für Spannrahmen aufzuzeigen.

Die Erfindung löst diese Aufgabe mit den Merkmalen in den Hauptansprüchen für die Wechselvorrichtung und die Bearbeitungsstation.

Die beanspruchte Wechselvorrichtung und die damit ausgerüstete Bearbeitungsstation haben den Vorteil eines geringeren Bauaufwands und Platzbedarfs. Dies betrifft einerseits die niedrigeren Herstellkosten und den geringeren Teileumfang. Außerdem kann das Steuerkonzept vereinfacht werden.

Durch den Wegfall von hochliegenden Führungen und eine bodenseitige Antriebstechnik werden auch die Störkonturen verkleinert und die Erreichbarkeit der Arbeitsstelle verbessert, was die Anlagenplanung erleichtert und vereinfacht. Die Roboter an der Arbeitsstelle werden weniger behindert. Zudem wird der Einsatz von Portalrobotern erleichtert. Auch die Zuführmöglichkeiten für Karosseriebauteile an die Arbeitsstelle werden verbessert.

Die Verlagerung der Kippsicherung in den Seiten- oder Bodenbereich der Spannrahmen ermöglicht eine flexiblere Gestaltung und Anordnung der Kippsicherungstechnik, die je nach Ausgestaltung auch nur stellenweise vorhanden sein kann. Kippsicherungen mit vorzugsweise schrägen Führungsrollen und Rollenaufnahmen haben den Vorteil, dass sie ein gewisses Spiel bieten, was für eine exakte Positionierung und Absteckung der Spannrahmen an der Arbeitsstelle von Vorteil ist. Zwängungen können vermieden werden. Zudem kann je nach Ausgestaltung der Transportvorrichtung die Kippsicherung während der Spannrahmenbewegung von der Schleppeinrichtung übernommen werden.

Das Taktzeitverhalten beim Spannrahmenwechsel wird verbessert. Ferner kann die Kapazität der Rahmenmagazine über eine externe Zuführeinrichtung vergrößert werden, welche mit einem weiteren Spannrahmenlager in Verbindung steht und ein Rahmentausch am Magazin ermöglicht. Die im Rahmenmagazin befindlichen Spannrahmen können auch zu Reparatur- oder Korrekturarbeiten oder zu anderen Zwecken ein- und ausgeschleust werden. Der Anlagenbetrieb kann in dieser Zeit ungehindert weitergehen.

Die Wechselvorrichtung lässt sich in neue Bearbeitungsstationen integrieren oder auch an bestehenden Stationen nachrüsten oder gegen eine andere vorhandene Wechselvorrichtung tauschen.

Vorteilhafter Weise kann die beanspruchte Wechselvorrichtung auch ein besseres und flexibleres Antriebs- und Transportkonzept haben. Die Spannrahmen lassen sich auf ihrer Führung mit einer größeren Bandbreite an Fahrmöglichkeiten bewegen. Insbesondere können die Spannrahmen wahlweise einzeln oder in einem gekuppelten Verbund bewegt werden, wobei dank einer Schleppvorrichtung mit mehreren einzeln steuerbaren und auf der gleichen Führung wie die Spannrahmen gelagerten Fahrwagen individuelle Bewegungsmöglichkeiten bestehen. Dies erlaubt eine Optimierung der Transportvorgänge und der Transportzeiten. Außerdem ergibt sich eine größere Flexibilität in der Anlagengestaltung und in der räumlichen Positionierung und in den Abständen der Rahmenmagazine gegenüber der Arbeitsstelle.

Die Variante der Schleppvorrichtung mit einem Schleppwagen, der eigenständig gelagert und dabei unterhalb oder neben der Führung für die Spannrahmen angeordnet ist, bietet antriebstechnische und konzeptionelle Vorteile. Die Antriebstechnik kann weitestgehend aus dem Bewegungsbereich der Spannrahmen und auch der Roboter an der Arbeitsstelle entfernt werden. Zudem wird die Antriebs- und Steuertechnik vereinfacht. Die Spannrahmen lassen sich mit Schwenkarmen an den Schleppwagen ankoppeln und mit diesen in einer Schleppverbindung bewegen. Die Schwenkarme können hierbei während der Fahrt die Kippsicherung der Spannrahmen übernehmen. Durch eine entsprechende Auslegung und Größenabstimmung können mit dieser Schleppvorrichtung zwei Spannrahmen gleichzeitig bewegt werden, so dass bei einem Rahmenwechsel in einem Zug der eine Spannrahmen entfernt und der neue Spannrahmen eingefahren werden kann. Bei einer entsprechenden Auslegung der Schleppvorrichtung kann auf eine Kollisionsüberwachung der Spannrahmen verzichten werden.

Die Wechselvorrichtung gestattet außerdem eine verbesserte Konzeption der Bearbeitungsstation. Der bisherige große Zustellschlitten, auf dem auch die ' Bearbeitungsvorrichtungen, insbesondere Industrieroboter, platziert waren, kann zu Gunsten einer stationären Roboteranordnung entfallen. Die beanspruchte Wechseltechnik ermöglicht eine größere Annäherung der Transportvorrichtung an die Transferlinie sowie eine platzsparende und kleine Bauweise der Zustellvorrichtung an der Arbeitsstelle. Die Roboter können näher an der Arbeitsstelle an der Karosserie platziert und dadurch stationär angeordnet werden, wobei ihre Reichweite für die Bearbeitungsvorgänge ausreicht.

Die Wechselvorrichtung kann in neue Bearbeitungsstationen integriert werden. Sie kann alternativ an vorhandenen Bearbeitungsstationen nachgerüstet oder gegen dortige andere Wechselvorrichtungen ausgetauscht und umgerüstet werden. Die Erfindung betrifft die Wechselvorrichtung an sich und auch eine mit einer solchen Wechselvorrichtung ausgerüsteten Bearbeitungsstation.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: Eine Draufsicht auf eine Bearbeitungsstation mit zwei beidseits einer Transferlinie angeordneten Wechselvorrichtungen für Spannrahmen,
- Figur 2:: eine abgebrochene und vergrößerte Draufsicht auf ein Rahmenmagazin von Figur 1 in Drehstellung zum Rahmenwechsel und auf eine Zustellvorrichtung,
- Figur 3:: eine vergrößerte abgebrochene Draufsicht auf ein Rahmenmagazin gemäß Figur 1 in Aufnahmestellung,
- Figur 4:: eine abgebrochene Seitenansicht der Zustellvorrichtung von Figur 2,
- Figur 5:: eine abgebrochene Seitenansicht eines Rahmenmagazins gemäß Figur 1 bis 4,
- Figur 6:: Eine Draufsicht auf eine Variante der Wechselvorrichtung für Spannrahmen,
- Figur 7:: eine Ausschnittsvergrößerung der Wechselvorrichtung von Figur 6,
- Figur 8:: eine vergrößerte Seitenansicht der Wechselvorrichtung und der Zustellvorrichtung von Figur 6 in zwei Stellungen,
- Figur 9:: eine Frontansicht einer Spannrahmenführung an einem Rahmenmagazin gemäß Pfeil IX von Figur 6,
- Figur 10:: eine Seitenansicht der Spannrahmenführung von Figur 9 gemäß Pfeil X und
- Figur 11:: eine Anordnungsvariante der Kippsicherung und des Rahmenlaufwerks.

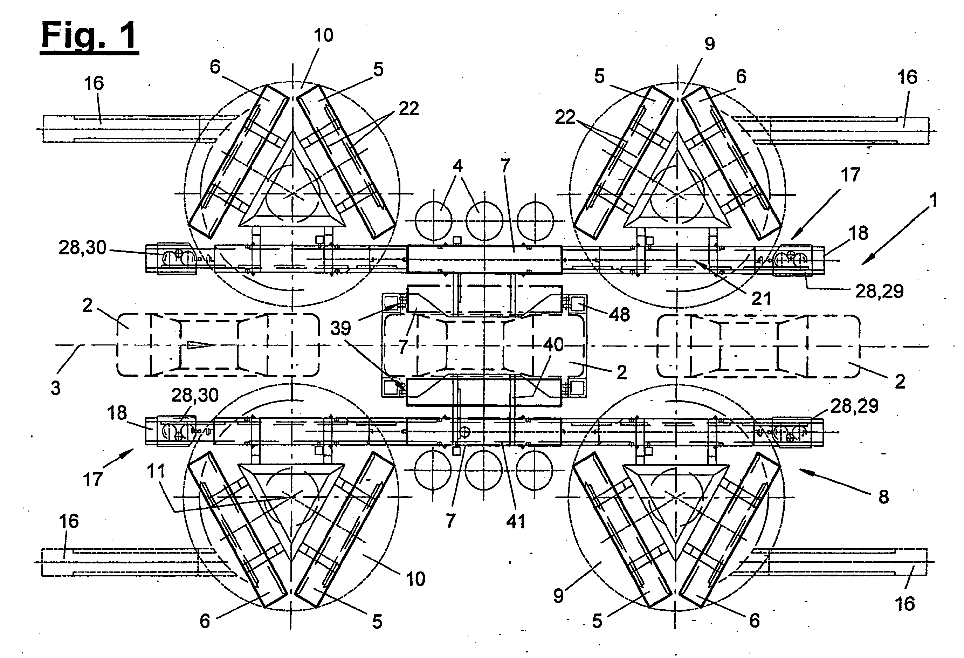

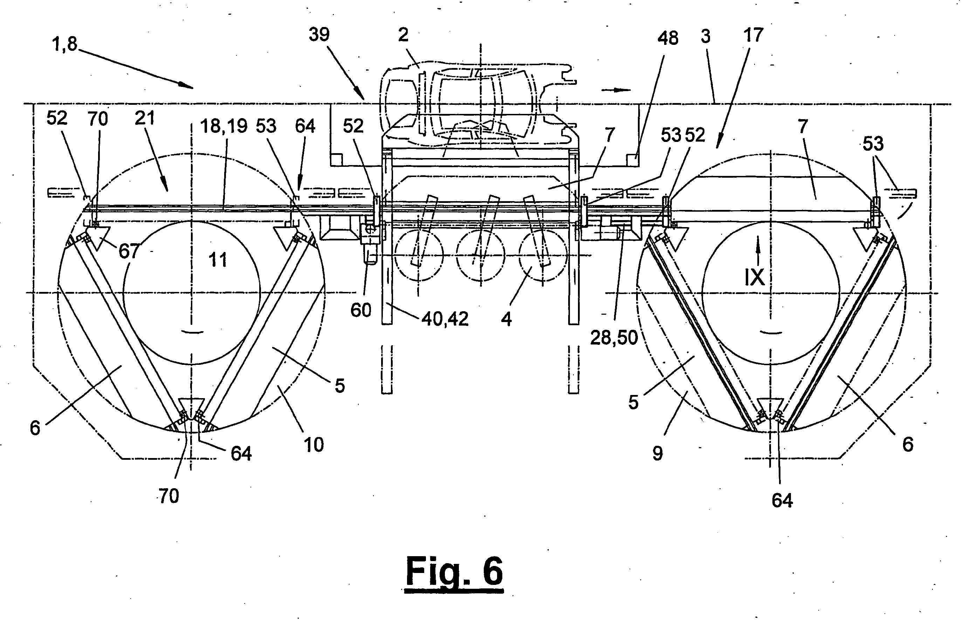

Figur 1 und 6 zeigen in schematischen Draufsichten eine Bearbeitungsstation (1) zur Bearbeitung von Werkstücken (2), die entlang einer Transferlinie (3) in Pfeilrichtung zugeführt und abtransportiert werden. Die Werkstücke (2) können von beliebiger Art und Größe sein. In der bevorzugten Ausführungsform handelt es sich um Fahrzeugkarosserien, insbesondere Rohkarosserien von Fahrzeugen. Die Bearbeitungsstation (1) kann z.B. eine Framingstation oder Geostation sein, in der die verschiedenen Karosserieteile, wie Bodengruppe, Seitenwände, Dachteil etc. in die Sollposition zueinander gebracht und gefügt, insbesondere mit Schweißverbindungen geheftet werden. Alternativ kann die Bearbeitungsstation (1) eine andere Art von Schweißstation, z.B. eine Ausschweißstation sein. Ferner sind beliebige andere Stationsgestaltungen möglich. Die Bearbeitungsvorgänge können von beliebiger Natur sein. Außer Schweißen sind Bearbeitungen, wie Drehen, Bohren, Kleben, Montieren oder dergleichen möglich. Die Bearbeitungsstation (1) ist hierfür mit ein oder mehreren Bearbeitungsvorrichtungen (4) ausgestattet, die auf ein oder beiden Seiten der Werkstücke (2) an der Transferlinie (3) angeordnet sein können. Die Bearbeitungsvorrichtungen (4) können beliebiger Art sein. In der gezeigten Ausführungsform handelt es sich um sechsachsige Industrieroboter, die Schweißwerkzeuge oder andere Werkzeuge führen. Die Bearbeitungsvorrichtungen (4) sind vorzugsweise stationär angeordnet.

Für die Bearbeitung der Werkstücke (2) werden bewegliche Spannrahmen (5,6,7) eingesetzt, die auf unterschiedliche Typen oder Arten von Werkstücken (2), insbesondere unterschiedliche Karosserieformen, adaptiert sind. Die Spannrahmen (5,6,7) sind mit geeigneten Spannwerkzeugen und ggf. auch mit integrierten Bearbeitungsvorrichtungen ausgerüstet. Die Spannrahmen (5,6,7) werden in der Bearbeitungsstation (1) an einem z.B. portalartigen Stationsgestell (48) an ein oder beiden Seiten an die Werkstücke (2) zugestellt und mittels einer Spannrahmenverriegelung lagegenau fixiert. Diese bearbeitungsgerechte Position wird als Arbeitsstelle (39) oder als Arbeitsposition bezeichnet.

Bei einem Wechsel der Werkstücke (2) ist häufig auch ein Spannrahmenwechsel erforderlich. Für diesen Zweck ist in der Bearbeitungsstation (1) mindestens eine Wechselvorrichtung (8) für die Spannrahmen (5,6,7) vorhanden. Vorzugsweise befinden sich zwei Wechselvorrichtungen (8) auf beiden Seiten der Transferlinie (3). Figur 1 bis 5 und 6 bis 9 zeigen zwei Varianten der Wechselvorrichtung (8).

Die Wechselvorrichtung (8) beinhaltet mindestens ein Rahmenmagazin (9,10) und eine Transportvorrichtung (17). Die beiden Varianten der Wechselvorrichtung (8) unterscheiden sich u.a. in der Gestaltung der Transportvorrichtung (17). Zusätzlich kann eine Zustellvorrichtung (40) für die Zustellung der Spannrahmen (5,6,7) zur Arbeitsstelle (39) vorhanden sein. Jede Wechselvorrichtung (8) hat in den beiden gezeigten Ausführungsformen zwei Rahmenmagazine (9,10), die beidseits und mit störungsfreier Distanz zur Arbeitsstelle (39) angeordnet sind. Die Rahmenmagazine (9,10) nehmen jeweils mehrere Spannrahmen (5,6,7) an Ladestellen auf und sind um eine Drehachse (11) im Kreis drehbar. In der gezeigten Ausführungsform handelt es sich um eine aufrechte bzw. senkrechte Drehachse (11).

Die Anordnung und Kinematik der Rahmenmagazine (9,10) ist variabel. Alternativ kann die Wechselvorrichtung (8) nur ein Rahmenmagazin oder in weiterer Abwandlung eine größere Zahl von Rahmenmagazinen aufweisen. Ferner können die Rahmenmagazine um eine anders ausgerichtete, insbesondere horizontale Drehachse rotieren und als stehendes Rad ausgebildet sein. Die Rahmenmagazine können außerdem mehrere Dreh- oder Bewegungsachsen haben, wobei die Spannrahmen auf einer von der Kreisform abweichenden Umlaufbahn bewegt werden.

Die Transportvorrichtung (17) besitzt in beiden Varianten eine Führung (18) und eine Schleppeinrichtung (28) für die Spannrahmen (5,6,7). Die Führung (18) erstreckt sich vorzugsweise parallel und mit seitlichem Abstand zur Transferlinie (3). Der Seitenabstand kann geringer als bei der EP 0 583 282 B1 sein.

Die Rahmenmagazine (9,10) ragen in den Bereich der Führung (18) hinein. Die Führung (18) besitzt in diesem Überlappungsbereich mit dem Rahmenmagazin (9,10) eine Ausnehmung (21). Dies kann wie in den dargestellten Ausführungsbeispielen eine Unterbrechung der Führung (18) sein, wobei sich die Führung (18) hinter der Unterbrechung weiter fortsetzt. Die Führung (18) kann alternativ am Überlappungsbereich und der Ausnehmung (21) enden.

Die Rahmenmagazine (9,10) besitzen ihrerseits an jeder Ladestelle ein oder mehrere Führungsteile (22), die in die Ausnehmung (21) der Führung (18) eingeführt oder eingesetzt werden können und in der Einsatzstellung weitgehend nahtlos an die stationäre Führung (18) anschließen. Die Spannrahmen (5,6,7) können durch diese Führungsgeometrie von der stationären Führung (18) direkt auf die am Rahmenmagazin (9,10) befindlichen und mit dem Rahmenmagazin beweglichen Führungsteile (22) gefahren oder von dort abgeholt werden.

Auch im Bereich der Zustellvorrichtung (40) kann die Führung (18) eine entsprechende Ausnehmung (21) aufweisen, wobei die Zustellvorrichtung (40) ein oder mehrere in die Ausnehmung (21) einsetzbare Führungsabschnitte (41) besitzt.

Die Führung (18) und die Führungsabschnitte (22,41) können in unterschiedlicher Weise gestaltet sein. In beiden gezeigten Ausführungsbeispielen handelt es sich um bodenseitig angeordnete Führungen, auf denen die Spannrahmen (5,6,7) stehend transportiert werden können. Für die Spannrahmen (5,6,7) ist eine bodenseitige und/oder eine seitliche Kippsicherung (64) vorhanden. Die seitliche Kippsicherung (64) greift im Seitenwandbereich und vorzugsweise in der unteren Wandbereichshälfte der Spannrahmen (5,6,7) an. Das externe Stützteil (64') der seitlichen Kippsicherung (64), z.B. eine Rollenaufnahme (66), ist seitlich neben oder unter dem Spannrahmen (5,6,7) stationär an der Bearbeitungsstation (1) oder instationär an der Schleppvorrichtung (28) angeordnet. Das dem Spannrahmen (5,6,7) zugeordnete Eingriffsteil (64") der seitlichen Kippsicherung (64) ist am besagten Seitenwandbereich, z.B. an einem oder mehreren vertikalen Rahmenträger(n), angeordnet.

Die seitliche Kippsicherung (64) und die Seitenführung der Spannrahmen (5,6,7) werden in der ersten Variante von Figur 1 bis 5 im wesentlichen über die mehrgleisige Schienenform und die mehrseitige Führung gewährleistet. In der zweiten Variante von Figur 6 bis 11 sind ein oder mehrere gesonderte seitliche Kippsicherungen (64) vorhanden, wobei die Kippsicherung (64) auch unter der Führung (18) liegen oder abgestützt sein kann. Im oberen Bereich der Spannrahmen (5,6,7) sind vorzugsweise keine Führungsmittel vorhanden. Die Schleppeinrichtung (28) ist in beiden Varianten ebenfalls im Bodenbereich und nahe oder direkt an der Führung (8) angeordnet.

In der Ausführungsform von Figur 1 bis 5 bestehen die stationäre Führung (18) und die beweglichen Führungsabschnitte (22,41) jeweils aus zwei parallelen Schienen (19,20, 23,24), Alternativ kann die Schienenzahl höher sein oder eine einzelne Schiene mit großer Stützbreite verwendet werden. Die Spannrahmen (5,6,7) haben'im Bereich ihrer Unterseite und ggf. in versenkter Anordnung an der unteren Rahmenwand entsprechende Laufwerke (27) mit mehreren frei drehbaren Laufrollen zum dreiseitigen formschlüssigen Eingriff und zur Führung an den Rändern der Schiene(n) (19,20,23,24). Unerwünschte Kipp- oder Versatzbewegungen der Spannrahmen (5,6,7) werden durch den Formschluss und die Stützbreite ausgeschlossen. Die Schienen (19,20,23,24) sind z.B. als flache und auf gleicher Höhe liegend angeordnete, seitlich vorstehende Leisten oder Schwerter ausgebildet, die an jedem Laufwerk (27) von drei Rollen oben, unten und seitlich umgriffen werden. Alternativ sind andere Gestaltungen der Schienen und Laufwerke möglich.

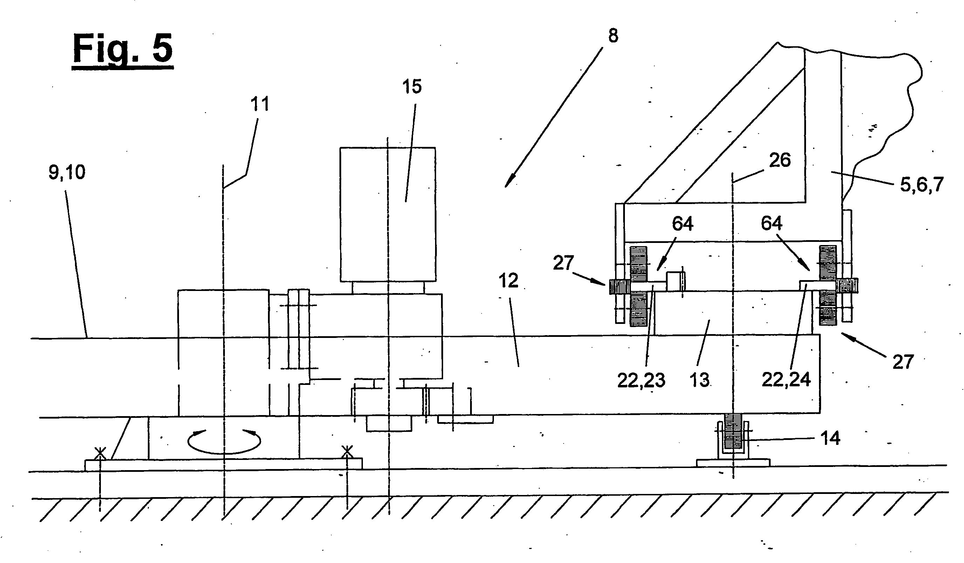

Die Rahmenmagazine (9,10) besitzen jeweils ein drehbar gelagertes Maschinengestell (12), welches z.B. in der in Figur 5 gezeigten Weise als horizontaler Drehtisch ausgebildet sein kann, der um die Drehachse (11) drehbar gelagert und mittels eines Antriebs (15) positionsgenau gedreht werden kann. Der Antrieb (15) ist mit einer geeigneten Steuerung (nicht dargestellt) verbunden. Zur exakten Drehpositionierung können Positionierhilfen, z.B. zustellbare Anschläge oder dgl., vorhanden sein. Am Magazingestell (12) sind mehrere Rahmenhalter (13) gleichmäßig im Kreis um die Drehachse (11) verteilt angeordnet. An den Rahmenhaltern (13) ist jeweils ein Führungsteil (22) zur Aufnahme von ein oder mehreren Spannrahmen (5,6,7) angeordnet. Mit geeigneten Fixiervorrichtungen können die Spannrahmen (5,6,7) auf den Rahmenhaltern (13) und ihren Führungsteilen (22) festgehalten und bei den Magazinbewegungen gesichert werden. Der Drehtisch ist umfangseitig an mehreren Stützrollen (14) unterhalb der Rahmenhalter (13) bodenseitig abgestützt.

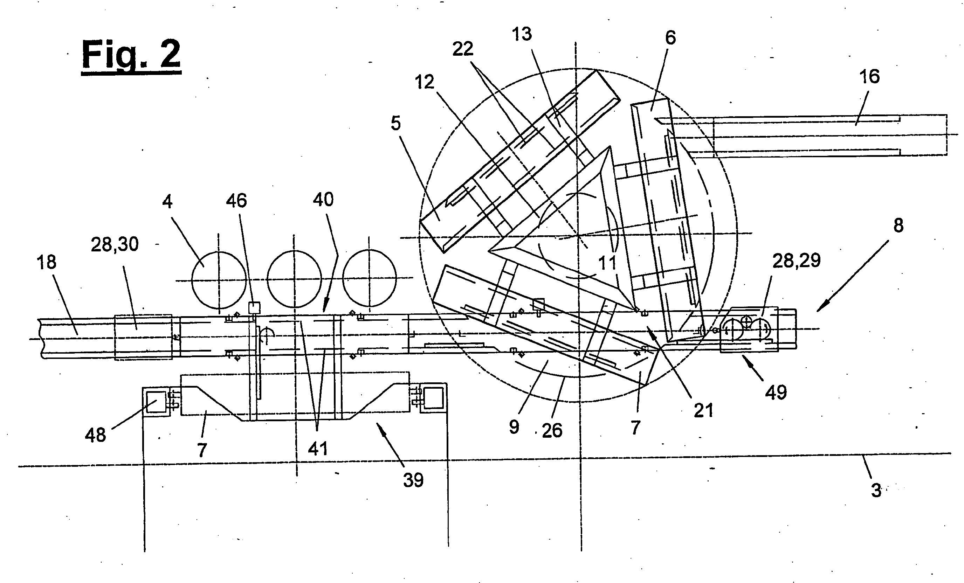

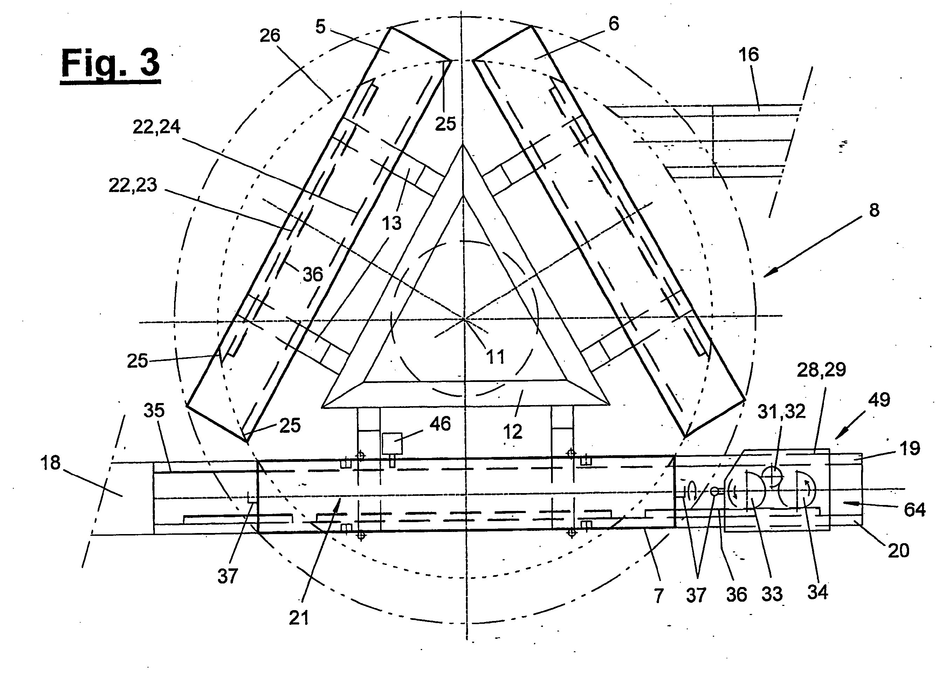

Wie Figur 3 verdeutlicht, sind die inneren und äußeren Schienen oder Schienenstücke (23,24) der Führungsteile (22) unterschiedlich lang. Sie enden allesamt an einem zur Drehachse (11) konzentrischen Drehkreis (26), an dem auch die stationären Schienen (19,20) der Führung (18) enden. Die jeweiligen Schienenenden (25) sind hierbei entsprechend der Drehkreisgeometrie ausgebildet und vorzugsweise gerundet. Die beweglichen und stationären Schienenenden (25) sind dabei jeweils ein kleines Stück vom Drehkreis (26) zurückversetzt, um eine zwängungsfreie Drehbewegung des Rahmenmagazins (9,10) zu ermöglichen. Durch die gerade Schienenform sind die inneren Schienenstücke (23) länger als die äußeren Schienenstücke (24). Die beweglichen Schienenstücke (23,24) und die stationären Schienen (19,20) befinden sich auf gleicher Höhe, so dass in der in Figur 3 gezeigten Aufnahmestellung die Schienen (19,20,23,24) in Fahrrichtung fluchten und ein Aufrollen und Abrollen der Spannrahmen (5,6,7) ermöglichen. Figur 2 zeigt eine Zwischenstellung oder Drehstellung des Rahmenmagazins (9), um einen anderen Spannrahmen (6) oder auch ein leeres Führungsteil (22) in die Aufnahmestellung zu bringen. In der Drehstellung ist die Ausnehmung (21) in der Führung (18) sichtbar.

Die geraden Führungsteile (22) bzw. Schienenstücke (23,24) bilden Sekanten zum Drehkreis (26). Diese Geometrie ermöglicht auch ein Einschleusen und Ausschleusen von Spannrahmen (5,6,7) des Rahmemagazins (9,10) an ein oder mehrerer externen Zuführeinrichtungen (16). Diese sind in der gezeigten Ausführungsform mit Abstand und parallel zur stationären Führung (18) derart angeschlossen und in entsprechender Weise mit Führungselementen, insbesondere Schienen, versehen, dass, auch hier bei entsprechender Drehstellung der Rahmenmagazine (9,10) ein Auffahren und Abfahren von Spannrahmen (5,6,7) möglich ist.

Die Spannrahmen (5,6,7) besitzen an mindestens einem Stirnende, vorzugsweise an beiden Stirnenden, eine Kupplung (37). Diese Kupplung (37) dient zum Verbinden zweier Spannrahmen (5,6,7) und außerdem zum Verbinden mit einer Schleppeinrichtung (28) zur Bewegung der Spannrahmen (5,6,7) entlang der Führung (18). Die Kupplung (37) kann selbsttätig arbeiten und z.B. eine Hakenkupplung sein, die an den gewünschten Stellen sich von selbst öffnet und schließt. Über schräge Hakennasen kann ein selbsttätiges Einrasten an entsprechenden ringförmigen Hakenaufnahmen stattfinden. Ein Lösen ist mittels Auflaufhöckern zum Anheben der Haken oder dergleichen möglich. Alternativ kann die Kupplung (37) ferngesteuert sein und ein oder mehrere geeignete Antriebe zum Öffnen und schließen der Kupplungselemente besitzen.

Die Schleppeinrichtung (28) kann in unterschiedlicher Weise ausgebildet sein. Im gezeigten Ausführungsbeispiel besitzt sie ein oder mehrere Fahrwagen (29,30), die auf der stationären Führung (18) und den in den Ausnehmungen (21) fluchtend eingesetzten Führungsteilen (22,41) angeordnet sind und vor und zurück fahren können. Die Fahrwagen (29,30) haben z.B. einen mitgeführten und integrierten Wagenantrieb (31), z.B. einen elektromotorischen Antrieb mit einer geeigneten Energieversorgung und sind mit einer Steuerung (nicht dargestellt) verbunden, an welche auch die Rahmenmagazine (9,10) angeschlossen sein können.

Figur 3 zeigt eine Ausführungsform der Schleppeinrichtung. (28) mit zwei Fahrwagen (29,30) im Detail. Die stationären Führungen (18) haben bei dieser Ausführungsform eine Ausnehmung (21) in Form einer Schienenunterbrechung und erstrecken sich über die Rahmenmagazine (9,10) hinaus. Hierdurch werden außerhalb des strichpunktiert dargestellten äußeren Störkreises der Rahmenmagazine (9,10) Parkpositionen (49) gebildet, in denen die Fahrwagen (29,30) in Ruhestellung und ohne Beeinträchtigung durch die Magazindrehung verharren können. In der gezeigten Ausführungsform mit zwei Rahmenmagazinen (9,10) sind an beiden Führungsenden Parkpositionen (49) für jeweils einen Fahrwagen (29,30) vorhanden. Die Fahrwagen (29,30) sind getrennt steuerbar und können unabhängig voneinander arbeiten.

Die Antriebstechnik kann unterschiedlich gestaltet sein. Im gezeigten Ausführungsbeispiel haben die Fahrwagen (29,30) in Längsrichtung oder Fahrtrichtung verteilt und distanziert angeordnete Treibmittel (33,34), die z.B. als Zahnräder ausgebildet sind. Sie wirken zusammen mit mindestens einem stationären Treibelement (36), welches z.B. als innen liegende Zahnstange an der äußeren Schiene (20) der Führung (18) ausgebildet ist. Auch die äußeren Schienenstücke (24) der Führungsteile (22,41) haben eine solche Zahnstange (36). Durch die verteilte Anordnung der Zahnräder ist ein sicheres Überfahren der Schienenstöße am Drehkreis (26) und die Aufrechterhaltung des Antriebseingriffs sichergestellt. Die beiden Zahnräder (33,34) können von einem mit dem Wagenantrieb (31) verbundenen Ritzel (32) angetrieben werden.

Das Ritzel (32) kann in einer nicht dargestellten Variante mit gleich großen Zahnraddurchmessern und Zahnmodulen seinerseits ein Treibmittel sein und mit einer Zahnstange (35) an der inneren Schiene (19) kämmen. Das Ritzel 32) ist dabei zwischen den Zahnrädern (33,34) angeordnet. Hierbei ergibt sich ein treibender Eingriff an drei in Fahrtrichtung getrennten Stellen.

In einer weiteren nicht dargestellten Variante können die Fahrwagen (29,30) einen externen stationären Wagenantrieb, z.B. einen umlaufenden Riementrieb oder Kettentrieb aufweisen.

In der gezeigten Ausführungsform ist die Länge der Führungsteile (22) an den Rahmenmagazinen (9,10) so groß bemessen, dass jeweils ein Spannrahmen (5,6,7) Platz hat. Die Führungslänge kann alternativ größer sein, so dass auch ein Fahrwagen (29,30) zusammen mit einem Spannrahmen (5,6,7) Platz findet. Der auf dem Rahmenmagazin (9,10) mitgeführte Fahrwagen (29,30) kann dann zum Ausschleusen des Spannrahmens an der externen Zuführeinrichtung (16) benutzt werden. Die Energieversorgung wird entsprechend umgeschaltet bzw. mitgeführt. Alternativ kann der Fahrwagen (29,30) bei dieser und auch bei den anderen vorbeschriebenen Varianten einen integrierten Energiespeicher mit aufladbaren Akkumulatoren, Druckspeichern für Fluide oder dgl. haben. In der Parkposition (49) wird der Energiespeicher über eine Dockingstation wieder aufgeladen. Ansonsten kann auch an der externen Zuführeinrichtung (16) ein eigener und zusätzlicher Fahrwagen vorhanden sein, der ggf. auch das angeschlossene Zusatzmagazin für Spannrahmen (5,6,7) bedient.

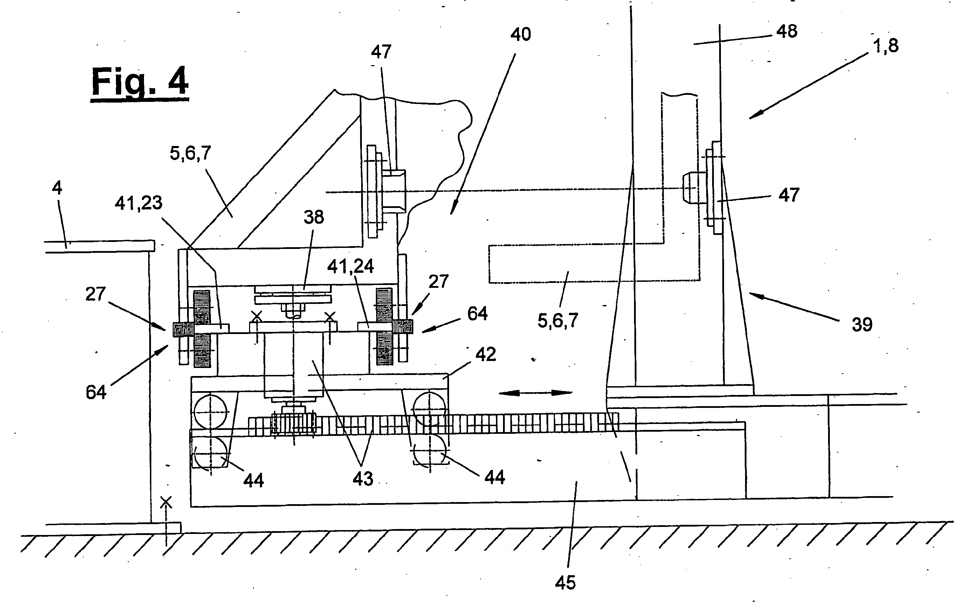

Die in Figur 4 in Seitenansicht dargestellte Zustellvorrichtung (40) besitzt einen quer zur Führung (18) und zur Transferlinie (3) verfahrbaren Zustellschlitten (42), auf dem das vorerwähnte Führungsteil (41) mit den beiden Schienenstücke (23,24) angeordnet ist. Die stationäre Führung (18) hat in diesem Bereich die besagte Unterbrechung (21). Mittels einer am Zustellschlitten (42) oder an der Zustellvorrichtung (40) stationär angebrachten Absteckung (46) (siehe Figur 2) kann die exakte Soll-Position für den zuzustellenden Spannrahmen (5,6,7) aufgefunden und festgelegt werden. Eine ähnliche Absteckung (46) für Spannrahmen (5,6,7) kann auch an dem oder den Rahmenmagazinen (9,10) im Bereich der Aufnahmestelle vorhanden sein, um auch hier eine exakte Rahmenpositionierung zum Ankuppeln und für die Transportbewegungen zu erreichen. Figur 3 zeigt diese Anordnung.

Der Zustellschlitten (42) besitzt ferner mindestens eine Kupplung (38) für die Betriebsmittelversorgung der Spannrahmen (5,6,7), die hierfür z.B. an der Rahmenunterseite ein entsprechendes Kupplungsgegenstück aufweisen. Die Betriebsmittel können elektrische Leistungs- und/oder Signalströme, Kühlmittel, Druckluft, Hydrauliköl oder dergl. sein. Figur 4 verdeutlicht außerdem die Ausbildung der vorerwähnten Spannrahmenverrieglung (47), von der jeweils ein Teil am Spannrahmen (5,6,7) und das andere Teil am Stationsgestell (48) angeordnet ist.

Die Bearbeitungsvorrichtungen (4), insbesondere Roboter, können gegenüber der Arbeitsstelle (39) hinter der Zustellvorrichtung (40) positioniert und dabei stationär angeordnet sein. Gegebenenfalls haben sie eine eigene Fahrachse, die bei vorgeschobenem Zustellschlitten (42) ein Nachfolgen des Roboters durch die Ausnehmung (21) in der Führung (18) erlaubt.

Der tischartige Zustellschlitten (42) besitzt ein Fahrwerk (44), mit dem er in Zustellrichtung an einem stationären Gestell (45) der Zustellvorrichtung verfahrbar geführt ist. Hierfür können in ähnlicher Weise wie bei der Führung (18) Schiene und Laufwerke mit dreiseitig angreifenden Rollen vorhanden sein. Die Schienen können am Ende ein vergrößertes Schienenspiel zur Vermeidung von Zwängungen beim Abstecken des Spannrahmens am Stationsgestell (48) aufweisen. Der Zustellschlitten (42) hat ferner einen steuerbaren Antrieb (43) der z.B. aus einem am Zustellschlitten (42) angebrachten Elektromotor mit einem Ritzel besteht, welches mit einer stationären Zahnstange am Gestel (45) kämmt. Alternativ kann z.B. ein Kurbeltrieb Verwendung finden.

In der gezeigten Ausführungsform haben die Rahmenmagazine (9,10) jeweils drei Aufnahmestellen und Rahmenhalter (13) bzw. Führungsteile (22) für drei verschiedene Spannrahmen (5,6,7). Die beidseits der Arbeitsstelle (39) angeordneten Rahmenmagazine (9,10) können hierbei gleichartig oder unterschiedlich mit Spannrahmen (5,6,7) bestückt sein. Bevorzugt wird eine gleichartige Bestückung. Die Vorgänge beim Spannrahmenwechsel werden nachfolgend an Hand von Figur 1 geschildert. Diese Zeichnung zeigt in der oberen und unteren Bildhälfte unterschiedliche Funktionszustände der beiden Wechselvorrichtungen (8). Bei der Darstellung in der unteren Bildhälfte befindet sich ein Spannrahmen (7) an der Arbeitsstelle (39) an der Fahrzeugkarosserie (2). Er stammt vom rechten Rahmenmagazin (9), dessen zugehöriges Führungsteil (22) sich in der Aufnahmestellung befindet und leer ist. Das andere Rahmenmagazin (10) ist hingegen voll mit drei Spannrahmen (5,6,7) bestückt, wobei es um eine Rahmenposition weiter gedreht ist, so dass sich nun der andere Spannrahmen (6) in der Aufnahmestellung befindet und zu einem Spannrahmenwechsel für die nachfolgende andere Karosserie (2) bereitsteht.

Die obere Bildhälfte von Figur 1 verdeutlicht in einer spiegelbildlichen Darstellung den nächsten Funktionsschritt, indem der zu wechselnde Spannrahmen (7) von der Arbeitsstelle (39) mit der Zustellvorrichtung (40) in fluchtende Stellung mit der Führung (18) zurückgebracht wurde und zum Wechsel bereit steht. Der linke Fahrwagen (30) hat den bereit gestellten neuen Spannrahmen (6) angekuppelt und aus der Aufnahmestellung entlang der Führung (18) an den bereit gestellten Spannrahmen (7) gefahren und dort angekuppelt. Der Spannrahmenverbund wird dann im nächsten Schritt vom Fahrwagen (30) nach rechts verschoben, bis der neue Spannrahmen (6) sich in der Zustellposition befindet und nach Abkupplung vom Spannrahmen (7) und vom Fahrwagen (30) an die Arbeitsstelle (39) zugestellt werden kann. Der nun frei stehende Spannrahmen (7) kann vom anderen Fahrwagen (29) angekuppelt und in die Aufnahmestellung am anderen Rahmenmagazin (9) gebracht werden. Anschließend kuppelt der Fahrwagen (29) ab und begibt sich in die Parkposition (49). Der andere Fahrwagen (30) ist ebenfalls in seine Parkposition (49) zurückgefahren. Für den nächsten anstehenden Rahmenwechsel kann je nach Bedarf der noch bereitstehende Spannrahmen (7) wieder zurückgebracht werden. Alternativ kann das Rahmenmagazin (9) um eine Position weiterdrehen und den dritten Spannrahmen (5) für einen weiteren Wechsel bereitstellen.

In Abwandlung der vorbeschriebenen Funktionsfolge können die Spannrahmen (5,6,7) einzeln von den jeweils zugehörigen Fahrwagen (29,30) angekuppelt und bewegt werden. Dies würde z.B. für den Fall in der oberen Bildhälfte von Figur 1 bedeuten, dass zunächst der rechte Fahrwagen (29) den zurückbewegten Spannrahmen (7) ankuppelt und in die Aufnahmestellung am rechten Rahmenmagazin (9) zieht. Der andere Fahrwagen (30) hat in der Zwischenzeit den neuen Spannrahmen (6) angekuppelt und schiebt diesen in die Übergabeposition an der Zustellvorrichtung (40), sobald der vorherige Spannrahmen (7) diese Stellung verlassen hat. Die Fahrwagen (29,30) können je nach Funktionsabfolge und nächster Wechselsituation nach Abkupplung von ihren jeweiligen Spannrahmen (5,6,7) in der gegebenen Position bleiben und dann gleich für den nächsten Wechselvorgang bereit stehen. Sie müssen nicht unbedingt in ihre Parkpositionen (49) zurückfahren.

Mit der zweiten Variante der Wechselvorrichtung (8) von Figur 6 bis 10 ist der Grundaufbau der Bearbeitungsstation (1) mit den Rahmenmagazinen (9,10) und der Zustellvorrichtung (40) weitgehend der gleiche wie im ersten Ausführungsbeispiel von Figur 1 bis 5. In der zweiten Ausführungsform haben die Führung (18) und die Führungsteile (22,41) an den Rahmenmagazinen (9,10) und der Zustellvorrichtung (40) nur eine einzelne Schiene oder Laufschiene (19), wobei das Laufwerk (27) an den Spannrahmen (5,6,7) entsprechend angepasst ist. Die notwendige Seiten- und Kippführung wird über mindestens eine seitlich von der Schiene (19) angeordnete Kippsicherung (64) bewerkstelligt. Die Kippsicherung (64) kann oberhalb oder unterhalb der Laufschiene (19) angeordnet sein. Außerdem ist im zweiten Ausführungsbeispiel eine andere Schleppeinrichtung (28) vorgesehen.

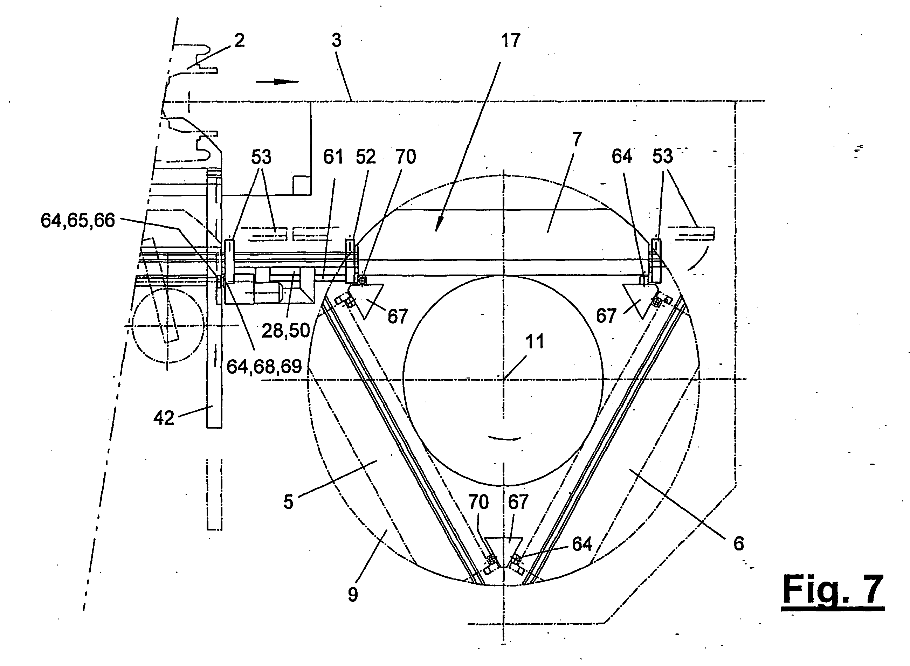

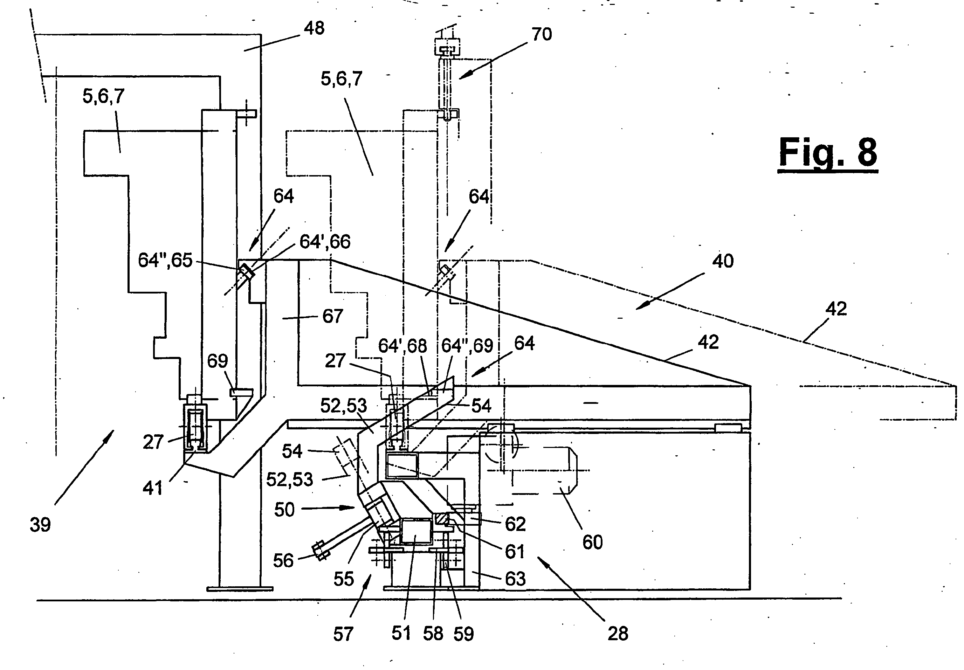

Wie Figur 6 und 7 in der Draufsicht und Figur 8 im Querschnitt verdeutlichen, ist die Schleppeinrichtung (28) unterhalb der mit Ständern oder Stützen (63) versehenen Führung (18) bzw. der Führungsabschnitte (22,41) angeordnet. Die Schleppeinrichtung (28) besitzt eine in etwa lotrecht unter der Führung (18) angeordnete und längs dieser sich erstreckende Schleppführung (57) mit ein oder mehreren daran verfahrbar gelagerten Schleppwagen (50). In der gezeigten Ausführungsform ist ein einzelner Schleppwagen (50) vorhanden. Dieser besteht aus einer Schleppstange (51) mit einem Fahrwerk (59), welches mehrere Radpaarungen aufweist, die mit zwei horizontalen Schleppschienen (58) formschlüssig in Eingriff stehen. An der Schleppstange (51) sind vier Schlepparme (52,53) mittels Schwenklagern (55) mit schräger Achse schwenkbar gelagert. Die Schlepparme (52,53) haben eine abgewinkelte Form und können sich um die schräge Lagerachse derart drehen, dass sich das vordere freie Armteil (54) zwischen einer Schleppstellung quer zur Führung (18) und einer Ruhestellung längs der Führung (18) bewegen kann. Hierdurch können die entsprechend axial positionierten Schlepparme (52,53) von außen an die Spannrahmen (5,6,7) angeklappt werden. Die Länge der Schleppstange (51) und die gegenseitigen Abstände der Schlepparme (52,53) sind derart auf die Abstände der Rahmenmagazine (9,10) von der Arbeitsstelle (39) abgestimmt, dass mit den beiden Schlepparmpaaren (52,53) in einer Transportbewegung gleichzeitig ein an der Zustellvorrichtung (40) befindlicher Spannrahmen (5,6,7) und ein an einem der Rahmenmagazine (9,10) befindlicher Spannrahmen (5,6,7) bewegt werden können. Mit einem Hub kann dadurch der alte Spannrahmen an die freie Ladestelle des anderen Rahmenmagazins übergeben und zugleich ein neuer Spannrahmen vom einen Rahmenmagazin in die Zustellvorrichtung (40) eingefahren werden. Eine gegenseitige Kollisionssicherung der Spannrahmen (5,6,7) ist bei dieser Schleppeinrichtung (28) entbehrlich.

Der Schleppwagen (50) hat einen stationären steuerbaren Schleppantrieb (60) mit einem Elektromotor, der über ein Antriebsritzel (62) mit einer Zahnstange (61) an der Schleppstange (51) im Eingriff steht. Die Zahnstange (61) hat eine der Hublänge entsprechende Stangenlänge. Die Schleppstange (51) hat eine größere Länge, die sich z.B. in Figur 6 von dem linken Schlepparm (52) an der Zustellvorrichtung (40) nach rechts bis zum rechten äußeren Schlepparm (53) am rechten Rahmenmagazin (9) erstreckt. Die Endpositionen der Schleppparme (52,53) am anderen linken Rahmenmagazin sind gestrichelt dargestellt. Die balkenförmige Schleppführung (57) erstreckt sich über die gesamte Länge der Bearbeitungsstation (1).

Die Schwenkbetätigung der Schlepparme (52,53) erfolgt über ein Stellelement (56), welches in beliebig geeigneter Weise ausgebildet sein kann. In der in Figur 8 gezeigten Ausführungsform handelt es sich um einen Ausleger am Schlepparm (52,53), der durch einen externen stationären Antrieb (nicht dargestellt) an den jeweiligen Übernahme- oder Übergabepositionen der Spannrahmen (5,6,7) betätigt und gedreht wird, wobei der Schwenkarm (52,53) eine entsprechende Schwenkbewegung ausführt. Alternativ können auf dem Schleppwagen (50) ein oder mehrere mitgeführte Antriebe für ein oder mehrere Schlepparme (52,53) vorhanden sein.

Wie Figur 6 und 7 verdeutlichen, werden die Schlepparme (52,53) von außen an die Seitenwände des Spannrahmens (5,6,7) geklappt und klemmen diesen zwischen sich ein. Zwischen den Schlepparmen (52,53) und dem Spannrahmen (5,6,7) kann eine Kippsicherung (64) vorhanden sein. Diese besteht z.B. gemäß Figur 7 und 8 aus einer Nut- und Federführung. Hierbei sind an den Seitenwänden der Spannrahmen (5,6,7) seitlich vorstehende Führungsleisten oder Federn (69) als Eingriffsteil (64") vorhanden, die bei der Anschwenkbewegung mit einem Stützteil (64'), z.B. einer entsprechenden Nut (68) an der Innenseite der Schlepparme (52,53), in formschlüssigen Eingriff treten. Die Ausrichtung von Nut (68) und Federn (69) kann vertikal, horizontal oder schräg sein. Alternativ kann die Kippsicherung (64) aus Mitnehmern oder Rollen an den Schlepparmen (52,53) als Stützteilen (64') bestehen, die bei Anklappen der Schlepparme (52,53) sich stützend vor die Innenseite der Spannrahmen (5,6,7) und ggf. auch zusätzlich führend hinter die Rahmenrückseite legen. Die Rahmenwände bilden dabei das Eingriffsteil (64"). Über die Kippsicherung (64) sind die Spannrahmen (5,6,7) während des Rahmentransports geschert.

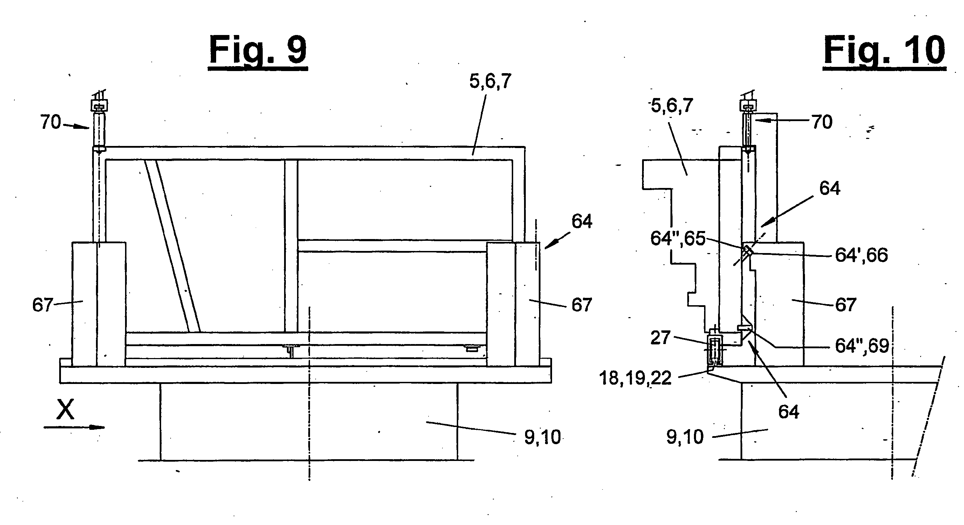

An den Rahmenmagazinen (9,10) und an der Zustellvorrichtung (40) sind zusätzliche und relativ zu den Führungsabschnitten (22,41) stationäre Kippsicherungen (64) vorhanden. Diese bestehen jeweils aus einer frei drehbaren und vorzugsweise schräg ausgerichteten Führungsrolle (65) als Eingriffsteil (64") an jedem Spannrahmen (5,6,7), die dort an einer geeigneten Stelle, z.B. an der Rückseite einer der vertikalen Randstreben, angeordnet ist. Figur 8 und 10 zeigen diese Anordnung. Die Führungsrolle (65) tritt in ihrer Sicherungsfunktion mit einer entsprechend geformten Rollenaufnahme (66) in Eingriff, die als Stützteil (64') sich an einer aufrechten ständerartigen Stütze (67) befindet, die an jeder Ladestelle der Rahmenmagazine (9,10) und am Zustellschlitten (42) angeordnet ist. Wenn ein Spannrahmen (5,6,7) auf eine Ladestelle und ein Führungsteil (22) an einem der Rahmenmagazine (9,10) oder auf den Zustellschlitten (42) und dessen Führungsteil (41) geschoben wird, tritt spätestens am Ende des Fahrhubs die Führungsrolle (65) in die Rollenaufnahme (66) und wird von dieser derart formschlüssig festgehalten, dass der Spannrahmen (5,6,7) nicht nach vorn oder hinten kippen kann. Der Rolleneingriff findet statt, bevor die Schleppeinrichtung (28) mit ihrer Kippsicherung (64) den Spannrahmen (5,6,7) frei gibt. Der Spannrahmen (5,6,7) ist dadurch in allen Fahr- und Ruhestellungen gegen Kippen gesichert.

Die Kippsicherungen (64) brauchen dabei keine allzu große Genauigkeit zu haben, weil die Rahmenpositionierung auf andere Weise vorgenommen wird. An der Zustellvorrichtung (40) und an der Arbeitsstelle (39) geschieht dies in der vorerwähnten Weise durch die Absteckungen (46). An den einzelnen Ladestellen der Rahmenmagazine (9,10) kann eine andere Art von Absteckung oder formschlüssiger Verriegelung (70) vorhanden sein. Hierfür sind z.B. an den drei oder mehr Stützen oder Ständern (67) bewegliche Fixierdorne angebracht, die in entsprechende Laschen an der Spannrahmenrückseite greifen. Figur 7 und 8 zeigen diese Anordnung. Die Absteckung (70) und die Kippsicherung (64) sind dabei an unterschiedlichen Rahmenaußenseiten angeordnet. Die Absteckungen (70) sind magazinfest und halten die Spannrahmen (5,6,7) während der Magazindrehungen fest und verhindern ein Wegrollen des Spannrahmens (5,6,7). Die Rahmenmagazine (9,10) in der ersten Ausführungsform von Figur 1 bis 5 können ähnliche Verriegelungen (70) haben (nicht dargestellt).

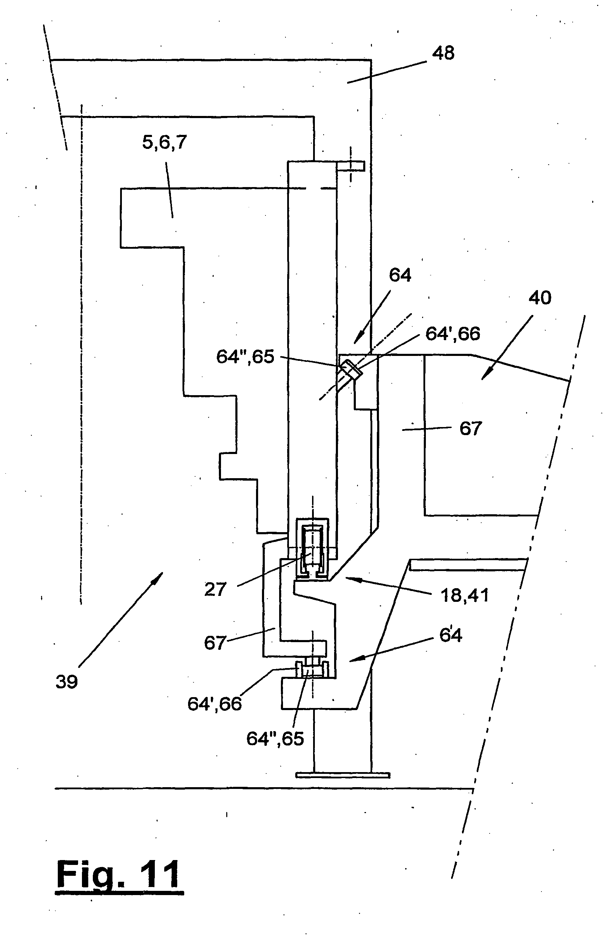

Figur 11 zeigt eine Variante der seitlichen Kippsicherung (64) und der Anordnung des Rahmenlaufwerks (27). Das Stützteil (64') der Kippsicherung (64), z.B. eine Rollenaufnahme (66), ist in diesem Fall unterhalb der Führung (18) bzw. des Führungsabschnitts (41) an der beispielhaft dargestellten Zustellvorrichtung (40) angeordnet. Das Eingriffsteil (64") der Kippsicherung (64) weist auch in diesem Fall eine um eine vertikale Achse frei drehbare Führungsrolle (65) auf, welche hier an einer als Ausleger ausgebildeten Stütze (67) angeordnet ist, die vom Spannrahmen (5,6,7) um die Führung (18,41) herum nach unten ragt. Die Rollenaufnahme (66) befindet sich an einer mit der Zustellvorrichtung (40) verbundenen beweglichen Stütze oder an einer stationären Stütze. Eine entsprechende Anordnung kann auch im Magazinbereich vorhanden sein.

Die in Figur 8 und auch in Figur 11 dargestellte obere Kippsicherung (64) am Ständer (67) kann zusätzlich zu der unteren Kippsicherung vorhanden sein. Sie kann alternativ auch entfallen. Figur 11 zeigt außerdem eine im unteren Spannrahmenbereich versenkte Anordnung des Laufwerks (27). Dies verringert die Bauhöhe und den Platzbedarf.

Abwandlungen der gezeigten und beschriebenen Ausführungsformen sind in verschiedener Weise möglich. Zum einen können die Führungen (18) und die Führungsteile (22,41) sowie die Kippsicherungen (64) in ihrer Form, Ausrichtung und Anordnung variieren. Sie können z.B. eine seitliche Schiene aufweisen, an denen die Spannrahmen (5,6,7) mit entsprechenden Laufrollen zusätzlich geführt sind. Vorzugsweise werden in allen Varianten die Spannrahmen (5,6,7) direkt und eigenständig verfahrbar mit den Führungen (18) bzw. Führungsteilen (22,41) verbunden Zudem können die Führungen (18) einen gebogenen Verlauf haben, um weiter entfernt angeordnete Rahmenmagazine (9,10) anzubinden. Durch diese freie Führungsgestaltung können die Rahmenmagazine (9,10) an beliebiger Stelle angeordnet werden. Mittels der einzeln steuerbaren Fahrwagen (29,30) lassen sich die Fahr- und Zustellbewegungen der Spannrahmen (5,6,7) voneinander entkoppeln, so dass auch insoweit kein Hindernis für individuelle und unterschiedliche Positionierungen der Rahmenmagazine (9,10) gegeben ist.

Variabel ist außerdem die Ausgestaltung und Anordnung der Schleppeinrichtung (28). Diese kann anstelle der Fahrwagen (29,30) einfachere Antriebe, z.B. ausfahrbare Zylinder, Kettenantriebe, Seilantriebe oder dergl. haben. Die in den vorbeschriebenen Ausführungsbeispielen dargestellten zwei Ausführungsformen von Schleppantrieben (28) mit den beiden Fahrwagen (29,30) bzw. dem Schleppwagen (50) haben eigenständige erfinderische Bedeutung und können unabhängig von der Art der Führung (18) sein. Sie lassen sich auch mit anderen Arten von Führungen, insbesondere den aus dem Stand der Technik bekannten konventionellen unteren und oberen Führungsschienen verwenden. Hierbei kann die Schleppeinrichtung (28) auch an anderer Stelle als im Bodenbereich angeordnet sein. Eine eigene erfinderische Bedeutung haben.auch die beanspruchten Kippsicherungen (64), insbesondere in der Variante mit den Führungsrollen (65) und der Rollenaufnahme (66). Dieses Führungskonzept mit einer bodenseitigen Schienenführung und seitlichen oder bodenseitigen Kippsicherungen (64) lässt sich auch in Verbindung mit anderen Arten von Rahmenmagazinen und Wechselvorrichtungen sowie anderen Schleppeinrichtungen mit Erfolg einsetzen. Eine eigene erfinderische Bedeutung kommt zudem den vorbeschriebenen Magazinerteiterungen und den externen Zuführeinrichtungen (16) zu. Diese können auch an beliebigen anderen und konventionellen Rahmenmagazinen und Wechselvorrichtungen eingesetzt werden.

Variabel ist zudem die technische Gestaltung der Rahmenmagazine (9,10) und deren Ausrichtung sowie Bestückung. Auch die Zahl und Anordnung der Magazine (9,10) in der Bearbeitungsstation (1) kann variieren.

### BEZUGSZEICHENLISTE

- 1: Bearbeitungsstation
- 2: Werkstück, Fahrzeugkarosserie
- 3: Transferlinie
- 4: Bearbeitungsvorrichtung, Roboter
- 5: Spannrahmen
- 6,: Spannrahmen
- 7: Spannrahmen
- 8: Wechselvorrichtung für Spannrahmen
- 9: Rahmenmagazin, Drehtisch
- 10: Rahmenmagazin, Drehtisch
- 11: Drehachse
- 12: Magazingestell
- 13: Rahmenhalter
- 14: Stützrolle
- 15: Antrieb Drehtisch
- 16: Zuführeinrichtung extern
- 17: Transportvorrichtung
- 18: Führung, Schienenführung
- 19: Schiene innen, Laufschiene
- 20: Schiene außen
- 21: Ausnehmung Führung
- 22: Führungsteil, Führungsabschnitt an Magazin
- 23: Schienenstück innen lang
- 24: Schienenstück außen kurz
- 25: Schienenende
- 26: Drehkreis
- 27: Laufwerk an Spannrahmen
- 28: Schleppeinrichtung
- 29: Fahrwagen
- 30: Fahrwagen
- 31: Wagenantrieb
- 32: Treibmittel, Zahnrad innen, Ritzel
- 33: Treibmittel, Zahnrad außen
- 34: Treibmittel, Zahnrad außen
- 35: Treibelement, Zahnstange innen
- 36: Treibelement, Zahnstange außen
- 37: Kupplung Fahrbetrieb
- 38: Kupplung Betriebsmittel
- 39: Arbeitsstelle
- 40: Zustellvorrichtung
- 41 Führungsteil,: Führungsabschnitt Zustellvorrichtung
- 42: Zustellschlitten
- 43: Zustellantrieb
- 44: Fahrwerk Zustelltisch
- 45: Gestell Zustellvorrichtung
- 46: Absteckung Spannrahmen
- 47: Spahnrahmenverriegelung
- 48: Stationsgestell
- 49: Parkposition Fahrwagen
- 50: Schleppwagen
- 51: Schleppstange
- 52: Schlepparm
- 53: Schlepparm
- 54: Armteil
- 55: Schwenklager
- 56: Stellelement, Ausleger
- 57: Schleppführung
- 58: Schleppschiene
- 59: Fahrwerk
- 60: Schleppantrieb
- 61: Treibmittel, Zahnstange
- 62: Ritzel
- 63: Stütze, Ständer
- 64: Kippsicherung
- 64': Stützteil
- 64": Eingriffsteil
- 65: Führungsrolle
- 66: Rollenaufnahme
- 67: Stütze, Ständer, Ausleger
- 68: Nut
- 69: Feder, Führungsleiste
- 70: Absteckung, Verriegelung

## Patentansprüche

1. Wechselvorrichtung für Spannrahmen (5,6,7) in einer Bearbeitungsstation (1) für Werkstücke (2), insbesondere Fahrzeugkarosserien, bestehend aus ein oder mehreren, um eine Drehachse (11) drehbaren und von einer Arbeitsstelle (39) distanzierten. Rahmenmagazinen (9,10) und einer Transportvorrichtung (17) mit einer Führung (18) und einer steuerbaren Schleppeinrichtung (28) für die' Spannrahmen (5,6,7), **dadurch gekennzeichnet, dass** die Transportvorrichtung (17) eine bodenseitige Führung (18) für einen stehenden Spannrahmentransport mit einer bodenseitigen oder seitlichen Kippsicherung (64) und einer im Bodenbereich angeordneten Schleppeinrichtung (28) für die Spannrahmen (5,6,7) aufweist.

2. Wechselvorrichtung nach Anspruch 1, **dadurch gekennzeichnet, dass** die Schleppeinrichtung (28) ein oder mehrere einzeln steuerbar angetriebene Fahrwagen (29,30) aufweist, die auf der bodenseitigen Führung (18) angeordnet sind, wobei die Spannrahmen (5,6,7) und die Fahrwagen (29,30) fernsteuerbare Kupplungen (37) aufweisen.

3. Wechselvorrichtung nach Anspruch 1 oder 2, **dadurch gekennzeichnet, dass** die Führung (18) über das Rahmenmagazin (9,10) hinausragt und eine Parkposition (49) für einen Fahrwagen (29,30) aufweist.

4. Wechselvorrichtung nach Anspruch 2 oder 3, **dadurch gekennzeichnet, dass** der Fahrwagen (29,30) einen mitgeführten steuerbaren Wagenantrieb (31) und mehrere verteilt angeordnete Treibmittel (32,33,34) aufweist, die mit mindestens einem Treibelement (35,36) an der Führung (18) im Eingriff steht.

5. Wechselvorrichtung nach Anspruch 1, **dadurch gekennzeichnet, dass** die Schleppeinrichtung (28) eine neben oder unterhalb der Führung (18) angeordnete Schleppführung (57) mit mindestens einem gesteuert angetriebenen Schleppwagen (50) mit mindestens einem beweglichen und mit einem Spannrahmen (5,6,7) in Eingriff bringbaren Schlepparm (52,53) aufweist.

6. Wechselvorrichtung nach Anspruch 5, **dadurch gekennzeichnet, dass** der Schleppwagen (50) eine längs der Führung (18) sich erstreckende Schleppstange (51) mit einem Fahrwerk (59) und mit mehreren schwenkbaren Schlepparmen (52,53) aufweist.

7. Wechselvorrichtung nach Anspruch 5 oder 6, **dadurch gekennzeichnet, dass** am Schleppwagen (50) vier axial beabstandete Schlepparme (52,53) aufweist, die jeweils paarweise mit einem Spannrahmen (5,6,7) in beidseitigen Schleppeingriff treten.

8. Wechselvorrichtung nach Anspruch 5, 6 oder 7, **dadurch gekennzeichnet, dass** die Schleppeinrichtung (28) einen stationären Schleppantrieb (60) aufweist, der am Schleppwagen (50) angreift.

9. Wechselvorrichtung nach Anspruch 8, **dadurch gekennzeichnet, dass** der Schleppantrieb (60) ein Ritzel (62) aufweist, das mit einer am Schleppwagen (50) angeordneten Zahnstange (61) kämmt.

10. Wechselvorrichtung nach einem der Ansprüche 5 bis 9, **dadurch gekennzeichnet, dass** der Schwenkarm (52,53) ein Stellelement (56) aufweist.

11. Wechselvorrichtung nach einem der vorhergehenden Ansprüche, **dadurch gekennzeichnet, dass** die Führung (18) mehrere bodenseitige parallele Schienen (19,20,23,24) zur kippsicheren Führung der Spannrahmen (5,6,7) aufweist und die Spannrahmen (5,6,7) Laufwerke (27) mit mehreren Rollen für einen formschlüssigen kippsicheren Eingriff an den Schienen (19,20,23,24) besitzen.

12. Wechselvorrichtung nach einem der Ansprüche 1 bis 10, **dadurch gekennzeichnet, dass** die Führung (18) eine Schiene (19) aufweist, wobei mehrere seitlich oder unterhalb der Führung (18) angeordnete stationäre Kippsicherungen (64) vorgesehen sind.

13. Wechselvorrichtung nach Anspruch 12, **dadurch gekennzeichnet, dass** an der Schleppeinrichtung (28) und am Rahmenmagazin (9,10) Kippsicherungen (64) angeordnet sind, die im Seitenwandbereich und insbesondere in der unteren Wandbereichshälfte der Spannrahmen (5,6,7) angreifen.

14. Wechselvorrichtung nach Anspruch 12 oder 13, **dadurch gekennzeichnet, dass** die Kippsicherung (64) mindestens ein externes, stationär oder instationär seitlich neben oder unter dem Spannrahmen (5,6,7) angeordnetes Stützteil (64') und mindestens ein dem Spannrahmen (5,6,7) zugeordnetes Eingriffsteil (64") aufweist, das an einem Seitenwandbereich, insbesondere an ein oder mehreren vertikalen Rahmenträger(n) angeordnet ist.

15. Wechselvorrichtung nach einem der Ansprüche 12 bis 14, **dadurch gekennzeichnet, dass** die' Kippsicherung (64) mindestens eine Führungsrolle (65) und mindestens eine Rollenaufnahme (66) aufweist.

16. Wechselvorrichtung nach Anspruch 15, **dadurch gekennzeichnet, dass** die Führungsrolle (65) an den Spannrahmen (5,6,7) und mehrere Rollenaufnahme (66) an den Rahmenmagazinen (9,10) angeordnet sind.

17. Wechselvorrichtung nach einem der Ansprüche 5 bis 10, **dadurch gekennzeichnet, dass** an den Schlepparmen (52,53) eine als Nut- und Federführung (68,69) ausgebildete Kippsicherung (64) angeordnet ist.

18. Wechselvorrichtung nach einem der vorhergehenden Ansprüche, **dadurch gekennzeichnet, dass** das Rahmenmagazin (9,10) in den Bereich der Führung (18) ragt, wobei die Führung (18) im Überlappungsbereich eine Ausnehmung (21) aufweist und das Rahmenmagazin (9,10) ein oder mehrere in die Ausnehmung (21) einsetzbare Führungsteile (22) besitzt.

19. Wechselvorrichtung nach einem der vorhergehenden Ansprüche, **dadurch gekennzeichnet, dass** die Transportvorrichtung (17) eine Zustellvorrichtung (40) für die Zustellung der Spannrahmen (5,6,7) zur Arbeitsstelle (39) aufweist.

20. Wechselvorrichtung nach Anspruch 19, **dadurch gekennzeichnet, dass** die Führung (18) im Bereich der Zustellvorrichtung (40) eine Ausnehmung (21) aufweist und die Zustellvorrichtung (40) ein oder mehrere in die Ausnehmung (21) einsetzbare Führungsabschnitte (41) besitzt.

21. Wechselvorrichtung nach einem der Ansprüche 19, 20, **dadurch gekennzeichnet, dass** die Zustellvorrichtung (40) eine Kippsicherung (64) für die Spannrahmen (5,6,7) aufweist.

22. Wechselvorrichtung nach einem der Ansprüche 19, bis 21, **dadurch gekennzeinchnet, dass** die Zustellvorrichtung (40) einen quer zur Führung (18) verfahrbaren Zustellschlitten (42) mit dem Führungsteil (41) und eine Absteckung (46) für mindestens einen Spannrahmen (5,6,7) aufweist.

23. Wechselvorrichtung nach Anspruch 22, **dadurch gekennzeichnet, dass** der Zustellschlitten (42) mindestens eine Kupplung (38) für die Betriebsmittelversorgung der Spannrahmen (5,6,7) aufweist.

24. Wechselvorrichtung nach einem der Ansprüche 22,23, **dadurch gekennzeichnet, dass** der Zustellschlitten (42) oder der Spannrahmen (5,6,7) eine mit einem Stationsgestell (48) verbindbare Spannrahmenverriegelung (47) aufweist.

25. Wechselvorrichtung nach einem der vorhergehenden Ansprüche, **dadurch gekennzeichnet, dass** das Rahmenmagazin (9,10) ein drehbar gelagertes Magazingestell (12) mit mehreren Rahmenhaltern (13) aufweist, wobei am Rahmenhalter (13) jeweils ein Führungsteil (22) zur Aufnahme von mindestens einem Spannrahmen (5,6,7) angeordnet ist.

26. Wechselvorrichtung nach einem der vorhergehenden Ansprüche, **dadurch gekennzeichnet, dass** an das Rahmenmagazin (9,10) eine Zuführeinrichtung (16) mit Führungselementen zum Ein- und Ausschleusen von Spannrahmen (5,6,7) angeschlossen ist.

27. Bearbeitungsstation für Werkstücke (2), insbesondere Fahrzeugkarosserien, mit einem Stationsgestell (48), mindestens einer Bearbeitungsvorrichtung (4) sowie einer Wechselvorrichtung (8) für Spannrahmen (5,6,7), **dadurch gekennzeichnet, dass** die Wechselvorrichtung (8) nach einem der vorhergehenden Ansprüche 1 bis 26 ausgebildet ist.

28. Bearbeitungsstation nach Anspruch 27, **dadurch gekennzeichnet, dass** die Bearbeitungsvorrichtung(en) (4) stationär angeordnet ist/sind.

## Claims

1. Changeover device for clamping frames (5, 6, 7) in a processing station (1) for workpieces (2), in particular vehicle bodies, comprising one or more frame magazines (9, 10) which can be rotated about an axis of rotation (11) and are spaced apart from a working point (39), and a transporting device (17) with a guide (18) and a controllable towing mechanism (28) for the clamping frames (5, 6, 7), **characterized in that** the transporting device (17) has a floor-side guide (18) for an upright transportation of the clamping frames, with a floor-side or lateral anti-tilt means (64) and a towing mechanism (28), which is arranged in the floor region, for the clamping frames (5, 6, 7).

2. Changeover device according to Claim 1, **characterized in that** the towing mechanism (28) has one or more moving carriages (29, 30) are arranged on the floor-side guide (18) which are driven in an individually controllable manner and the clamping frames (5, 6, 7) and the moving carriages (29, 30) having couplings (37) which can be controlled remotely.

3. Changeover device according to Claim 1 or 2, **characterized in that** the guide (18) projects over the frame magazine (9, 10) and has a parking position (49) for a moving carriage (29, 30).

4. Changeover device according to Claim 2 or 3, **characterized in that** the moving carriage (29, 30) has a controllable carriage drive (31) carried along with it and a plurality of distributed propelling means (32, 33, 34) which are in engagement with at least one propelling element (35, 36) on the guide (18).

5. Changeover device according to Claim 1, **characterized in that** the towing mechanism (28) has a towing guide (57), which is arranged next to or below the guide (18), with at least one towing carriage (50) which is driven in a controlled manner and has at least one movable towing arm (52, 53) which can be brought into engagement with a clamping frame (5, 6, 7).

6. Changeover device according to Claim 5, **characterized in that** the towing carriage (50) has a tow bar (51) which extends along the guide (18) and has a chassis (59) and a plurality of pivotable towing arms (52, 53).

7. Changeover device according to Claim 5 or 6, **characterized in that** on the towing carriage (50) there are four axially spaced-apart towing arms (52, 53) which, in each case in pairs, enter into towing engagement with both sides of a clamping frame (5, 6, 7).

8. Changeover device according to Claim 5, 6 or 7, **characterized in that** the towing mechanism (28) has a stationary towing drive (60) which acts on the towing carriage (50).

9. Changeover device according to Claim 8, **characterized in that** the towing drive (60) has a pinion (62) which meshes with a rack (61) arranged on the towing carriage (50).

10. Changeover device according to one of Claims 5 to 9, **characterized in that** the pivoting arm (52, 53) has an adjustment element (56).

11. Changeover device according to one of the preceding claims, **characterized in that** the guide (18) has a plurality of floor-side parallel rails (19, 20, 23, 24) for anti-tilt guidance of the clamping frames (5, 6, 7) and the clamping frames (5, 6, 7) have travelling mechanisms (27) with a plurality of rollers for form-fitting, anti-tilt engagement on the rails (19, 20, 23, 24).

12. Changeover device according to one of Claims 1 to 10, **characterized in that** the guide (18) has a rail (19), with a plurality of stationary anti-tilt means (64) being provided laterally or below the guide (18).

13. Changeover device according to Claim 12, **characterized in that** anti-tilt means (64) are arranged on the towing mechanism (28) and on the frame magazine (9, 10), said anti-tilt means acting in the side wall region and, in particular, in the lower wall region half of the clamping frames (5, 6, 7).

14. Changeover device according to Claim 12 or 13, **characterized in that** the anti-tilt means (64) has at least one external supporting part (64') arranged in a fixed or movable manner laterally next to or under the clamping frame (5, 6, 7), and at least one engagement part (64") assigned to the clamping frame (5, 6, 7), which engagement part is arranged on a side wall region, in particular on one or more vertical frame carrier(s).

15. Changeover device according to one of Claims 12 to 14, **characterized in that** the anti-tilt means (64) has at least one guide roller (65) and at least one roller

16. Changeover device according to Claim 15, **characterized in that** the guide roller (65) is arranged on the clamping frames (5, 6, 7) and a plurality of roller mounts (66) are arranged on the frame magazines (9, 10).

17. Changeover device according to one of Claims 5 to 10, **characterized in that** an anti-tilt means (64) in the form of a tongue and groove guide (68, 69) is arranged on the towing arms (52, 53).

18. Changeover device according to one of the preceding claims, **characterized in that** the frame magazine (9, 10) projects into the region of the guide (18), the guide (18) having a recess (21) in the overlapping region, and the frame magazine (9, 10) having one or more guide parts (22) which can be inserted into the recess (21).

19. Changeover device according to one of the preceding claims, **characterized in that** the transporting device (17) has an advancing device (40) for advancing the clamping frames (5, 6, 7) to the working point (39).

20. Changeover device according to Claim 19, **characterized in that** the guide (18) has a recess (21) in the region of the advancing device (40), and the advancing device (40) has one or more guide sections (41) which can be inserted into the recess (21).

21. Changeover device according to one of Claims 19, 20, **characterized in that** the advancing device (40) has an anti-tilt means (64) for the clamping frames (5, 6, 7).

22. Changeover device according to one of Claims 19 to 21, **characterized in that** the advancing device (40) has an advancing slide (42), which is movable transversely with respect to the guide (18), with the guide part (41) and a demarcation means (46) for at least one clamping frame (5, 6, 7).

23. Changeover device according to Claim 22, **characterized in that** the advancing slide (42) has at least one coupling (38) for the supply of operating means to the clamping frames (5, 6, 7).

24. Changeover device according to one of Claims 22, 23, **characterized in that** the advancing slide (42) of the clamping frame (5, 6, 7) has a clamping frame lock (47) which can be connected to a station framework (48).

25. Changeover device according to one of the preceding claims, **characterized in that** the frame magazine (9, 10) has a rotatably mounted magazine framework (12) with a plurality of frame holders (13), a respective guide part (22) for receiving at least one clamping frame (5, 6, 7) being arranged on the frame holder (13).

26. Changeover device according to one of the preceding claims, **characterized in that** a feed mechanism (16) with guide elements for the inward and outward transfer of clamping frames (5, 6, 7) is connected to the frame magazine (9, 10).

27. Processing station for workpieces (2), in particular vehicle bodies, with a stationary framework (48), at least one processing device (4) and a changeover device (8) for clamping frames (5, 6, 7), **characterized in that** the changeover device (8) is designed as claimed in one of the preceding claims 1 to 26.

28. The processing station as claimed in Claim 27, **characterized in that** the processing device(s) (4) is/are arranged in a fixed manner.

## Revendications

1. Dispositif de changement pour des cadres de serrage (5, 6, 7) dans une station d'usinage (1) pour des pièces (2), en particulier des carrosseries de véhicules, se composant d'un ou de plusieurs magasins de cadres (9, 10) distants d'un poste de travail (39) et pouvant tourner autour d'un axe de rotation (11), et d'un dispositif de transport (17) avec un guide (18) et un dispositif de halage réglable (28) pour les cadres de serrage (5, 6, 7), **caractérisé en ce que** le dispositif de transport (17) comprend un guide (18) de fond pour un transport dressé de cadres de serrage avec une protection inférieure ou latérale contre le basculement (64) et un dispositif de halage (28) disposé dans la région du fond pour les cadres de serrage (5, 6, 7).

2. Dispositif de changement selon la revendication 1, **caractérisé en ce que** le dispositif de halage (28) comprend un ou plusieurs chariots entraînés (29, 30) pouvant être commandés individuellement, qui sont disposés sur le guide de fond (18), dans lequel les cadres de serrage (5, 6, 7) et les chariots (29, 30) présentent des embrayages (37) pouvant être commandés à distance.

3. Dispositif de changement selon la revendication 1 ou 2, **caractérisé en ce que** le guide (18) se prolonge au-delà du magasin de cadres (9, 10) et présente une position de parcage (49) pour un chariot (29, 30).

4. Dispositif de changement selon la revendication 2 ou 3, **caractérisé en ce que** le chariot (29, 30) comprend un entraînement de chariot commandable embarqué (31) et plusieurs moyens d'entraînement répartis (32, 33, 34), qui sont en prise avec au moins un élément d'entraînement (35, 36) sur le guide (18).

5. Dispositif de changement selon la revendication 1, **caractérisé en ce que** le dispositif de halage (28) comprend un guide de halage (57) disposé à côté ou en dessous du guide (18), avec au moins un chariot de halage (50), entraîné de façon commandée, comportant au moins un bras de halage (52, 53) mobile et pouvant être amené en prise avec un cadre de serrage (5, 6, 7).

6. Dispositif de changement selon la revendication 5, **caractérisé en ce que** le chariot de halage (50) présente une barre de halage (51) s'étendant le long du guide (18), avec un train de roulement (59) et avec plusieurs bras de halage pivotants (52, 53).

7. Dispositif de changement selon la revendication 5 ou 6, **caractérisé en ce que** le chariot de halage (50) présente quatre bras de halage (52, 53) axialement espacés, qui viennent chaque fois par paires en prise de halage sur les deux côtés avec un cadre de serrage (5, 6, 7).

8. Dispositif de changement selon la revendication 5, 6 ou 7, **caractérisé en ce que** le dispositif de halage (28) présente un entraînement de halage stationnaire (60), qui engrène avec le chariot de halage (50).

9. Dispositif de changement selon la revendication 8, **caractérisé en ce que** l'entraînement de halage (60) comprend un pignon (62), qui engrène avec une crémaillère (61) disposée sur le chariot de halage (50).

10. Dispositif de changement selon l'une quelconque des revendications 5 à 9, **caractérisé en ce que** le bras pivotant (52, 53) comprend un élément de réglage (56).

11. Dispositif de changement selon l'une quelconque des revendications précédentes, **caractérisé en ce que** le guidage (18) comprend plusieurs rails (19, 20, 23, 24) parallèles au fond pour le guidage sans basculement des cadres de serrage (5, 6, 7) et les cadres de serrage (5, 6, 7) comprennent des trains de roulement (27) avec plusieurs rouleaux pour une liaison non basculante par complémentarité de forme sur les rails (19, 20, 23, 24).

12. Dispositif de changement selon l'une quelconque des revendications 1 à 10, **caractérisé en ce que** le guide (18) comprend un rail (19), dans lequel il est prévu plusieurs protections contre le basculement stationnaires (64) disposées à côté ou en dessous du guide (18).

13. Dispositif de changement selon la revendication 12, **caractérisé en ce que** des protections contre le basculement (64) sont disposées sur le dispositif de halage (28) et sur le magasin de cadres (9, 10), lesquelles s'engagent dans la région de la paroi latérale et en particulier dans la moitié inférieure de la région de paroi des cadres de serrage (5, 6, 7).

14. Dispositif de changement selon la revendication 12 ou 13, **caractérisé en ce que** la protection contre le basculement (64) présente au moins une pièce d'appui (64') externe, stationnaire ou non stationnaire, disposée à côté ou en dessous du cadre de serrage (5, 6, 7), et au moins une pièce d'accrochage (64") associée au cadre de serrage (5, 6, 7), qui est disposée sur une région de paroi latérale, en particulier sur un ou plusieurs supports de cadre verticaux.

15. Dispositif de changement selon l'une quelconque des revendications 12 à 14, **caractérisé en ce que** la protection contre le basculement (64) comprend au moins un rouleau de guidage (65) et au moins un logement de rouleau (66).

16. Dispositif de changement selon la revendication 15, **caractérisé en ce que** le rouleau de guidage (65) est disposé sur le cadre de serrage (5, 6, 7) et plusieurs logements de rouleau (66) sont disposés sur les magasins de cadres (9, 10).

17. Dispositif de changement selon l'une quelconque des revendications 5 à 10, **caractérisé en ce qu'**une protection contre le basculement (64) en forme de guide à rainure et languette (68, 69) est disposée sur les bras de halage (52, 53).

18. Dispositif de changement selon l'une quelconque des revendications précédentes, **caractérisé en ce que** le magasin de cadres (9, 10) se prolonge dans la région du guide (18), dans lequel le guide (18) présente un évidement (21) dans la région de recouvrement et le magasin de cadres (9, 10) possède une ou plusieurs pièces de guidage (22) à introduire dans l'évidement (21).

19. Dispositif de changement selon l'une quelconque des revendications précédentes, **caractérisé en ce que** le dispositif de transport (17) présente un dispositif d'amenée (40) pour amener les cadres de serrage (5, 6, 7) au poste de travail (39).

20. Dispositif de changement selon la revendication 19, **caractérisé en ce que** le guide (18) présente un évidement (21) dans la région du dispositif d'amenée (40) et le dispositif d'amenée (40) possède une ou plusieurs parties de guidage (41) à introduire dans l'évidement (21).

21. Dispositif de changement selon l'une quelconque des revendications 19 ou 20, **caractérisé en ce que** le dispositif d'amenée (40) présente une protection contre le basculement (64) pour les cadres de serrage (5, 6, 7).

22. Dispositif de changement selon l'une quelconque des revendications 19 à 21, **caractérisé en ce que** le dispositif d'amenée (40) comprend un chariot d'amenée (42), avec la pièce de guidage (41), déplaçable transversalement au guide (18) et un jalon (46) pour au moins un cadre de serrage (5, 6, 7).

23. Dispositif de changement selon la revendication 22, **caractérisé en ce que** le chariot d'amenée (42) présente au moins un couplage (38) pour l'alimentation des moyens de fonctionnement des cadres de serrage (5, 6, 7).

24. Dispositif de changement selon l'une quelconque des revendications 22 ou 23**, caractérisé en ce que** le chariot d'amenée (42) ou le cadre de serrage (5, 6, 7) comprend un verrouillage de cadre de serrage (47) pouvant être relié à un châssis de station (48).

25. Dispositif de changement selon l'une quelconque des revendications précédentes, **caractérisé en ce que** le magasin de cadres (9, 10) comprend un châssis de magasin rotatif (12) avec plusieurs supports de cadre (13), dans lequel un support de cadre (13) comporte chaque fois une pièce de guidage (22) destinée à recevoir au moins un cadre de serrage (5, 6, 7).

26. Dispositif de changement selon l'une quelconque des revendications précédentes**, caractérisé en ce qu'**un dispositif d'introduction (16) avec des éléments de guidage est raccordé au magasin de cadres (9, 10) pour l'introduction et la sortie de cadres de serrage (5, 6, 7).

27. Station d'usinage pour des pièces (2), en particulier des carrosseries de véhicules, avec un châssis de station (48), au moins un dispositif d'usinage (4) ainsi qu'un dispositif de changement (8) pour des cadres de serrage (5, 6, 7), **caractérisé en ce que** le dispositif de changement (8) est réalisé selon l'une quelconque des revendications 1 à 26 qui précèdent.

28. Dispositif de changement selon la revendication 27, **caractérisé en ce que** le/les dispositif(s) d'usinage (4) est/sont stationnaire(s).
